# EUROPEAN PATENT SPECIFICATION

(11) **EP 0 504 626 B1**
(45) Date of publication and mention of the grant of the patent: **10.05.1995**
(21) Application number: 92103170.4
(22) Date of filing: 25.02.1992
(51) Int. Cl.: B60Q 1/00

(54) **Optical unit for vehicles**
Beleuchtungseinheit für Fahrzeuge
Bloc optique pour véhicule

(30) Priority: 05.03.1991 IT TO910154
(43) Date of publication of application: 23.09.1992
(73) Proprietor: CARELLO S.p.A., I-10135 Torino (IT)
(72) Inventor: Bottigliengo, Silvano, I-10043 Orbassano (IT)
(74) Representative: Jorio, Paolo, Dr. Ing.

(56) References cited:
- FR-A- 2 630 059
- GB-A- 2 130 352
- GB-A- 2 162 627

## Description

This invention relates to an optical unit for vehicles of the type comprising a headlamp and a sidelight located alongside each other, and means for attaching the sidelight to the headlamp, like, for example that shown in GB-A-2130352.

The optical unit shown in the aforementioned GB patent application, as well as shown in GB-A-2162627, is of relatively complex connection/disconnetion of the sidelight on/from the headlamp, because the elastic means ensuring the axial fixing in the engaged position, are not under tension in the disengaged position, so that they can assume under the force of gravity any positions difficult to be reached by the user at the moment to carry out the connection and/or may disengage from their support, with the risk of going missed.

The object of this invention is to provide an optical unit for vehicles which provides for easy disconnection of the sidelight from the headlamp, and which has anteriorly a front surface which as far as possible appears to be a single surface although it is in fact comprised of a front surface of the headlamp alongside a front surface of the sidelight.

GB-A-2 130 352 forms the preamble of claim 1.

In accordance with this invention an optical unit is provided for vehicles and comprising a headlamp, a sidelight and a connection means to attach the sidelight in a position alongside the headlamp wherein the connection means (11) comprise elastic means (20) disposed in a position which is accessible from the exterior, contact means (15) borne by the sidelight (3), which can be connected to said elastic means (20) to immobilise the sidelight (3) axially with respect to the headlamp (2), and wherein the elastic means (20) are elastically deformable against the thrust of their own elastic reaction between an engaged position wherein the elastic means are connected to the sidelight (3) to a disengaged position; **characterized** in that the optical unit further comprise engaging means (14) mounted on the headlamp (2), and in that said elastic means (20) are placed between said engaging means (14) and a point of attachment (27) located on the headlamp (2) posteriorly with respect to the engaging means (14) themselves, the said engaging means comprising a bar (14) which is substantially perpendicular to the said optical axes (4, 5) and in turn comprises a square terminal appendage (17), a seat (19) being provided externally in the headlamp (2), in a direction substantially perpendicular to the corresponding optical axis (4), said seat (19) being engaged in a rotatable manner by the said square appendage (17) in order to allow the bar (14) to rotate about an axis of the square appendage (17) from and towards said engaged position, wherein said bar (14) engages said contact means (15), towards and from said disengaged position, wherein the bar (14) cannot engage said contact means (15).

Preferably, in the optical unit defined above the said elastic means extend between the said point of attachment and the said engaging means in a direction which is inclined with respect to the said optical axes.

The invention will now be described with reference to the appended drawings which illustrate a non-restrictive embodiment of the invention, in which:
Figure 1 is a plan view, with parts in cross-section and parts removed for clarity, of a preferred embodiment of the optical unit according to the invention, and
Figure 2 is a partial posterior view on an enlarged scale of the optical unit in Figure 1.

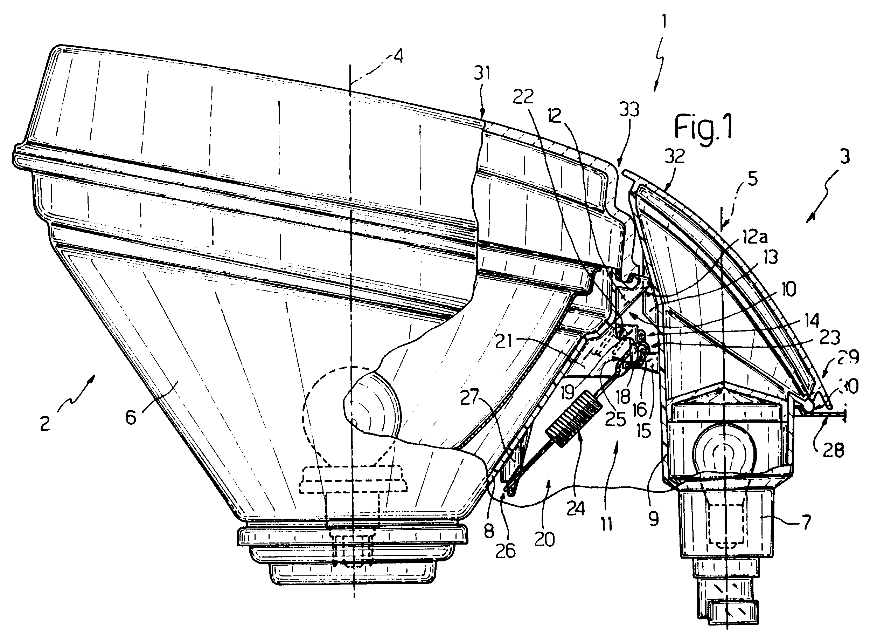

With reference to Figure 1, 1 indicates an optical unit for vehicles, as a whole, comprising a headlamp 2 and a sidelight 3 located alongside each other and having corresponding optical axes 4 and 5 which are substantially parallel to each other.

Headlamp 2 and sidelight 3 have corresponding posterior enclosures 6 and 7 whose lateral walls, indicated respectively by 8 and 9, are coupled together by means of a centering device 10 and an attachment device 11.

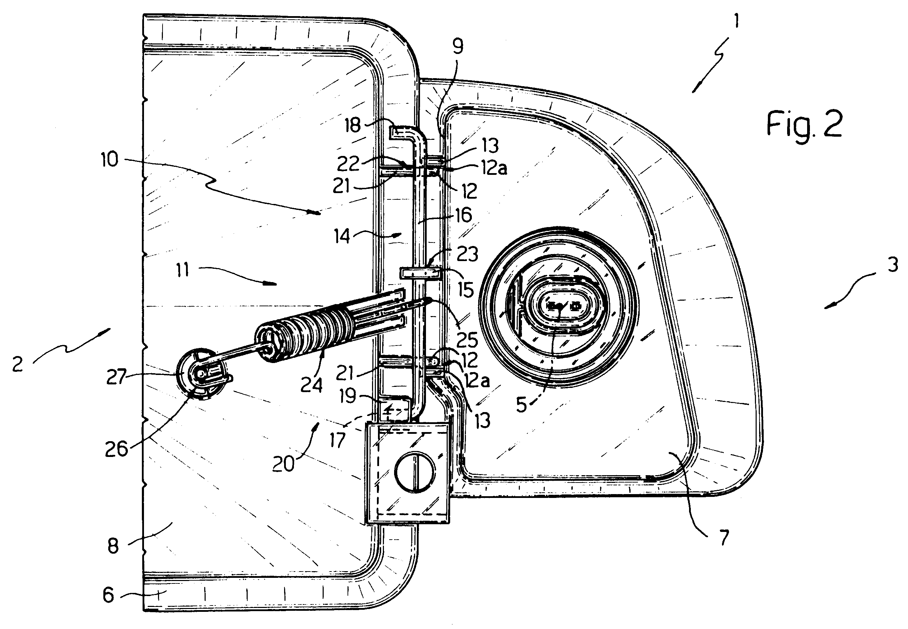

As illustrated in particular in Figure 2, centering device 10 comprises a first pair of lateral appendages 12 which extend laterally from wall 8 towards wall 9 and are placed parallel to each other and optical axis 4, and a second pair of lateral appendages 13 which extend laterally from wall 9 towards wall 8, and are placed parallel to appendages 12. In particular, each appendage 13 is placed immediately outside a corresponding appendage 12 in such a way that appendages 12 act together with appendages 13 to define a guide 12a for the axial sliding of sidelight 3 with respect to headlamp 2.

Connection means 11 makes it possible to immobilise sidelight 3 in a position with respect to headlamp 2 along said guide 12a, and, as better illustrated in Figure 1, comprises a transverse engaging bar 14 borne by wall 8 of headlamp 2 posteriorly to appendages 12, and a contact member borne by sidelight 3 and comprising a hook 15 which extends from wall 9 towards wall 8 in a position intermediate to appendages 13 and posterior to appendages 13.

With reference to Figure 2, bar 14 is substantially U-shaped and has a straight intermediate portion 16 provided at its opposite ends with two square appendages 17 and 18 which are substantially parallel to each other and perpendicular to optical axis 4. Appendage 17 is rotatably mounted within a seat 19 provided externally on wall 8 to allow bar 14 to rotate about an axis of appendage 17 against the thrust of an elastic restoring member 20 from an engaged position in which bar 14 is substantially placed on a plane perpendicular to optical axes 4 and 5 and engages hook 15, to a disengaged position in which bar 14 is disengaged from hook 15. A further rotation by bar 14 under the thrust of the elastic member perpendicular to the axis of appendage 17, following elastic deformation of seat 19, allows bar 14 to be displaced from the disengaged position to an engaged position in which bar 14 is outside the track followed by hook 15 when sidelight 3 is displaced with respect to headlamp 2 along guide 12a.

With this object wall 8 has a further appendage 21 posteriorly with respect to each of appendages 12 and in a position in line therewith, an anterior surface 22 of which is located anteriorly to a surface 23 by which bar 14 is supported on hook 15. Also elastic member 20 comprises a spring 24 which is positioned so as to be inclined backwards and towards optical axis 4 with respect to bar 14, and is provided with an anterior attachment member 25 in order to attach it to bar 14, and a posterior attachment member 26 to attach it to an attachment appendage 27 which extends backwards from a point on wall 8 placed posteriorly to bar 14.

In use, as illustrated in Figure 1, once headlamp 2 has been mounted and fixed on the body 28 of a motor vehicle, sidelight 3 is mounted on body 28 in a position alongside headlamp 2 with its own appendages 13 coupled to side 12a in such a way that it is immobilised transversely by appendages 12 but can move axially with respect to appendages 12 and at the same time can rotate with respect to headlamp 2 and body 28 about an axis normal to guide 12a.

The forward movement of sidelight 3 ceases when a lateral appendage 29 thereof located on wall 9 from the opposite strip with respect to appendages 13 comes to be supported on body 28 defining with body 28 itself a hinge support 30 which is substantially parallel to bar 14.

At this point an operator may, by inserting a suitable tool such as a screwdriver from above into the space between walls 8 and 9, act on appendage 18 in such a way as to displace bar 14, which until that moment was folded by elastic member 20 against wall 8 and held by elastic member 20 in contact with surface 22 of appendages 21 in the engaged position aforementioned, towards wall 9. A similar displacement of bar 14 towards wall 8 results in sliding of bar 14 along surfaces 22 until it reaches hook 15, in contact with supporting surface 23 from which bar 14 is bent back by the force imparted to it by elastic member 20. This force, which is directed backwards from hook 15 towards the optical axis 4 of headlamp 2, not only prevents sidelights 3 from sliding forwards with respect to headlamp 2, but acts together with hinge support 30 to effect rotation of anterior transparent member 32 sealing sidelight 3 towards an anterior transparent member 31 sealing headlamp 2 in such a way as to reduce the width of a slit 33 between transparent member 31 and 32 to a specified minimum.

If it is desired to disconnect sidelight 3 from headlamp 2 all that is necessary is to act from above on appendage 18 in such a way as to bring about forward rotation of bar 14 about the axis of corresponding appendage 17. When bar 14 is sufficiently forwardly displaced from supporting surface 23 to reach the level of surfaces 22 then elastic member 20, acting on bar 14 with a force having a component directed towards headlamp 2, brings about a transverse displacement of bar 14 along surfaces 22 to reach the disengaged position outside the track of hook 15.

## Claims

1. An optical unit for vehicles comprising a headlamp (2), a sidelight (3) and connection means (11) to fix the sidelight (3) in a position alongside the headlamp (2) in which the said headlamp (2) and the sidelight (3) have optical axes (4, 5) which are substantially parallel to each other, wherein the connection means (11) comprise elastic means (20) disposed in a position which is accessible from the exterior, contact means (15) borne by the sidelight (3), which can be connected to said elastic means (20) to immobilise the sidelight (3) axially with respect to the headlamp (2), and wherein the elastic means (20) are elastically deformable against the thrust of their own elastic reaction between an engaged position wherein the elastic means are connected to the sidelight (3) to a disengaged position; **characterized** in that the optical unit further comprise engaging means (14) mounted on the headlamp (2), and in that said elastic means (20) are placed between said engaging means (14) and a point of attachment (27) located on the headlamp (2) posteriorly with respect to the engaging means (14) themselves, the said engaging means comprising a bar (14) which is substantially perpendicular to the said optical axes (4, 5) and in turn comprises a square terminal appendage (17), a seat (19) being provided externally in the headlamp (2), in a direction substantially perpendicular to the corresponding optical axis (4), said seat (19) being engaged in a rotatable manner by the said square appendage (17) in order to allow the bar (14) to rotate about an axis of the square appendage (17) from and towards said engaged position, wherein said bar (14) engages said contact means (15), towards and from said disengaged position, wherein the bar (14) cannot engage said contact means (15).

2. An optical unit according to claim 1, characterised in that the said elastic means (20) extend between the said point of attachment (27) and the said engaging means (14) in a direction which is inclined with respect to the said optical axes (4, 5).

3. An optical unit according to anyone of the foregoing claims 1 and 2, characterised in that the said contact means (15) comprise a hook extending from the sidelight (3) towards the headlamp (2) and located with a cavity therein facing forward.

4. An optical unit according to claim 4, characterised in that the headlamp (2) comprises supporting means (21) which are contiguous with the said hook to support the bar (14) in the said disengaged position against the action of the said elastic means (20), the bar (14) being located when in the said disengaged position outside a track followed by the said hook (15) during an axial displacement separating the sidelight (3) from the headlamp (2).

## Patentansprüche

1. Eine Beleuchtungseinheit für Fahrzeuge, umfassend einen Scheinwerfer (2), eine Seitenleuchte (3) und Verbindungsmittel (11) zum Befestigen der Seitenleuchte (3) in einer Position längs des Scheinwerfers (2), in der der Scheinwerfer (2) und die Seitenleuchte (3) im wesentlichen zueinander parallele optische Achsen (4, 5) aufweisen, wobei die Verbindungsmittel (11) elastische Mittel (20) umfassen, angeordnet in einer Position, die von außen zugänglich ist, Kontaktmittel (15) umfassen, getragen von der Seitenleuchte (3), die mit den elastischen Mitteln (20) verbindbar sind, zum Festlegen der Seitenleuchte (3) axial relativ zu dem Scheinwerfer (2), und wobei die elastischen Mittel (20) elastisch deformierbar sind gegen die Vorspannung ihrer eigenen elastischen Reaktion zwischen einer Eingriffsposition, in der die elastischen Mittel mit der Seitenleuchte (3) verbunden sind, in eine entkoppelte Position, **dadurch gekennzeichnet**, daß die Beleuchtungseinheit ferner Eingriffsmittel (14) umfaßt, die an dem Scheinwerfer (2) montiert sind, und daß die elastischen Mittel (20) zwischen den Eingriffsmitteln (14) und einem Befestigungspunkt (27) plaziert sind, der an dem Scheinwerfer (2) relativ zu den Eingriffsmitteln (14) selbst hinten lokalisiert ist, wobei die Eingriffsmittel eine Stange (14) umfassen, die im wesentlichen senkrecht zu den optischen Achsen (4, 5) ist und ihrerseits einen rechteckigen Endfortsatz (17) umfaßt, wobei ein Sitz (19) außerhalb des Scheinwerfers (2) vorgesehen ist, in einer Richtung im wesentlichen senkrecht zu der entsprechenden optischen Achse (4), welcher Sitz (19) von dem rechteckigen Fortsatz (17) drehbar erfaßbar ist, um der Stange (14) eine Drehung um eine Achse des rechteckigen Fortsatzes (17) in die bzw. aus der Eingriffsposition zu ermöglichen, wobei die Stange (14) das Kontaktmittel (15) erfaßt, in Richtung in die und aus der entkoppelten Position, in der die Stange (14) das Kontaktmittel (15) nicht erfassen kann.

2. Eine optische Einheit nach Anspruch 1, dadurch gekennzeichnet, daß die elastischen Mittel (20) sich zwischen dem Befestigungspunkt (27) und dem Eingriffsmittel (14) in einer Richtung erstrecken, die schräg verläuft relativ zu den optischen Achsen (4, 5).

3. Eine optische Einheit nach einem der vorangehenden Ansprüche 1 und 2, dadurch gekennzeichnet, daß das Kontaktmittel (15) einen Haken umfaßt, der sich von der Seitenleuchte (3) in Richtung des Scheinwerfers (2) erstreckt und mit einer Ausnehmung desselben nach vorne gerichtet positioniert ist.

4. Eine optische Einheit nach Anspruch 3, dadurch gekennzeichnet, daß der Scheinwerfer (2) Stützmittel (21) umfaßt, die den Haken fortsetzen, zur Abstützung der Stange (14) in der entkoppelten Position gegen die Wirkung der elastischen Mittel (20), wobei die Stange (14) in ihrer entkoppelten Position außerhalb einer Bahn positioniert ist, welcher der Haken (15) während einer axialen Verlagerung folgt, mit der die Seitenleuchte (3) von dem Scheinwerfer (2) gelöst wird.

## Revendications

1. Un bloc optique pour véhicules comprenant un phare (2), un feu de position (3) et des moyens de montage pour fixer le feu de position (3) dans une position côte à côte avec le phare (2), dans lequel ledit phare (2) et ledit feu de position (3) ont des axes optiques (4, 5) qui sont sensiblement parallèles l'un par rapport à l'autre, dans lequel les moyens de montage (11) comprennent des moyens élastiques (20) disposés dans une position accessible de l'extérieur, des moyens de contact (15) supportés par le feu de position (3), qui peuvent être raccordés auxdits moyens élastiques (20) pour immobiliser axialement le feu de position (3) par rapport au phare (2) et dans lequel les moyens élastiques (20) sont élastiquement déformables à l'encontre de la poussée de leur propre réaction élastique entre une position engagée, dans laquelle les moyens élastiques sont reliés au feu de position (3) jusqu'à une position dégagée; caractérisé en ce que le bloc optique comprend en outre des moyens d'engagement (14) montés sur le phare (2) et en ce que lesdits moyens élastiques (20) sont placés entre lesdits moyens d'engagement (14) et un point de fixation (27) situé sur le phare (2), à l'arrière par rapport aux moyens d'engagement (14) eux-mêmes, lesdits moyens d'engagement comprenant une barre (14), sensiblement perpendiculaire auxdits axes optiques (4, 5) et comportant, de son côté, une patte d'extrémité carrée (17), un siège (19) étant prévu à l'extérieur dans le phare (2), dans une direction sensiblement perpen-diculaire à l'axe optique correspondant (4), ledit siège (19) étant engagé à rotation par ladite patte carrée (17) pour permettre à la barre (14) de tourner autour d'un axe de la patte carrée (17) à partir de et vers ladite position d'engagement, dans laquelle ladite barre (14) s'engage sur lesdits moyens de contact (15), vers et à partir de ladite position dégagée et à partir de celle-ci, dans laquelle ladite barre (14) ne peut s'engager sur lesdits moyens de contact (15).

2. Un bloc optique selon la revendication 1, caractérisé en ce que lesdits moyens élastiques (20) s'étendent entre ledit point de fixation (27) et lesdits moyens d'engagement (14), dans une direction inclinée par rapport auxdits axes optiques (4, 5).

3. Un bloc optique selon l'une quelconque des revendications 1 et 2, caractérisé en ce que lesdits moyens de contact (15) comprennent un crochet s'étendant à partir du feu de position (3) vers le phare (2) et logé à l'intérieur d'une cavité tournée vers l'avant.

4. Un bloc optique selon la revendication 3, caractérisé en ce que le phare (2) comprend des moyens de support (21) contigus audit crochet pour supporter la barre 14 dans ladite position dégagée, contre la sollicitation desdits moyens élastiques (20), la barre (14) étant située, en position dégagée, à l'extérieur d'un trajet suivi par ledit crochet (15) pendant un déplacement axial séparant le feu de position (3) du phare (2).
